# EUROPEAN PATENT APPLICATION

(11) **EP 4 400 177 A1**
(43) Date of publication of application: **17.07.2024**
(21) Application number: 23150901.9
(22) Date of filing: 10.01.2023
(51) Int. Cl.: A62B 1/00, B63B 27/14, E06C 1/52, E06C 7/08, F03D 80/50, E04G 1/36

(54) **CLIMBING DEVICE**

(71) Applicant: Siemens Gamesa Renewable Energy A/S, 7330 Brande (DK)
(72) Inventor: Harboe, Niels, 9560 Hadsund (DK)
(74) Representative: SGRE-Association

(57) **Abstract**

The present invention relates to a climbing device (10) for a person (11) during the manufacturing process of a wind turbine, comprising flexible ladder structure (12) with rungs (13), a suction unit (14) for attaching the ladder structure (12) to a surface (15) via suction force, and an activation unit (16) for activating the suction unit (14) to generate the suction force and for deactivating the suction unit (14) to release the suction force.

## Description

The present invention relates to a climbing device for a person during the manufacturing process of a wind turbine and parts of the wind turbine having large inclined and/or curved surfaces in particular.

During the production and manufacturing of large composite components like rotor blades for wind turbines, it is necessary to access a mold for maintenance and preparation of the mold surface, mounting of filters and other tasks. Since parts for wind turbines, in particular rotor blades, increase in size, it becomes more and more difficult to access these parts during the manufacturing process. In addition, the surfaces on which the operators have to work on are often slippery and/or heavily inclined. Therefore, the working location is not only hard to reach for operators but also dangerous to work in. Furthermore, the geometry of rotor blades or the molds thereof change a lot from a root towards and beyond a shoulder, due to which conventional climbing devices like ladders cannot be used in the desired manner. In order to still work in the described environment, it is known to provide climbing gear like a harness and/or ropes to secure the operator during the manufacturing process and to help them to reach the desired positions.

It is an object of the present invention to provide an improved climbing device. In particular, it is an object to provide a climbing device that is easy to use by a person while providing safe movements and/or motions of the person.

Aforesaid object is achieved by the subject-matters of the claims. In particular, the object is achieved by a climbing device according to claim 1. Further features and details of the invention can be drawn from the dependent claims, the description and the figures.

According to the present invention, a climbing device for a person during the manufacturing process of a wind turbine is provided. The climbing device comprises an elastically bendable ladder structure with rungs, a suction unit for attaching the ladder structure to a surface via suction force, and an activation unit for activating the suction unit to generate the suction force and for deactivating the suction unit to release the suction force.

By means of the flexible ladder structure, the shape of the climbing device can be easily adapted to uneven and/or curved surfaces. Therefore, the climbing device can be stably positioned even on those surfaces. Further, by being able to adapt the shape of the ladder structure to the shape of the surface, the ladder structure can be laid down onto the surface, and the force applied by the ladder structure onto the surface can be evenly distributed by the whole length of the ladder structure. In this way, defects and/or damages to the surface and/or the wall structure underneath the surface can be prevented. By being able to manually adapt the shape of the ladder structure to the shape of the surface, the suction force can be applied in the desired manner even on differently curved surfaces. That is, the same climbing device can be used for different surfaces each having different curvatures while the user is able to adapt the shape of the ladder structure to each curvature in an easy and reliable manner. The suction unit may also work beneficial at the different surfaces and the different curvatures, respectively. This is of particular advantage when the suction unit comprises a plurality of suction means in at least three different positions at the ladder structure, for example, in a lower part, a middle part and an upper part of the ladder structure. The climbing device frees up portal cranes as no handling of intermediate inserts is necessary, all of which have come in multiple shapes in the past to comply with the changing geometry of the parts to be manufactured.

Having the activation unit, the suction force can be reliably generated. This leads to the appropriate security for the person using the climbing device. The activation unit can be configured to automatically activate and/or deactivate the suction unit as soon as a trigger, for example a button or a switch of the climbing device, is operated. That is, the climbing device preferably comprises an auxiliary device and/or machine to activate and/or deactivate the suction unit by means of the activation unit in a predetermined manner when operating the activation unit. However, the activation unit may also be understood as a means for passively activating and/or deactivating the suction means. For example, the activation unit may comprise a connection port, to which a hose and/or tube may be connected in order to generate negative pressure in the suction unit. In particular, air in the suction unit can be sucked out via the connection port and the connected tube and/or hose. In this case, a fluid connection is provided between the connection port and the suction unit. Further, it would be possible that the climbing device comprises a Venturi unit for generating negative pressure at the suction unit by means of compressed air.

The rungs can be understood as steps, treads and/or stairs of the ladder structure. In a preferred embodiment, the rungs are step-shaped, that is, each rung may comprise a riser and a tread. The rungs and/or steps may comprise rounded corners and/or edges. In this way, safety can be further improved when using the climbing device.

In order to achieve the desired flexibility of the ladder structure, each rung can be made elastically bendable. Further, the rungs can be provided moveable, for example, elastically moveable, relative to each other when being climbed by the person and/or when positioned at a curved surface such that the geometry and/or shape of the ladder structure can be adapted to that of the curved surface. The rungs may thus be made of a flexible material like plastic and/or rubber and/or have a suitable geometry. Further, it is possible that the rungs are connected with each other by flexible coupling means. In a preferred embodiment of the present invention, such coupling means can be made of plastic and/or rubber. Alternatively, or in addition, it is possible that the coupling means are made of a textile. For example, the rungs could be connected with each other by ropes and/or bands. That is, the coupling means may comprise flexible ropes and/or bands.

The climbing device being provided for a person is to be understood such that the climbing device is provided and/or constructed to be used by a person in a way that the person can climb on the flexible ladder structure once the suction unit is activated and sucked to the surface, respectively, while the suction unit will hold the ladder structure secure at the surface even against gravitation force. Further, the climbing device is constructed such that a single person can carry and mount it to the desired surface.

The climbing device can comprise a lockable storage room for tools and consumption materials used for the work to be done so that the person can concentrate on handling the climbing device and an access point to be reached.

The surface may be understood as the surface of a wall of a structure, in particular, a structure which is manufactured to obtain the desired object like the rotor blade.

According to a further embodiment of the present invention, the activation unit comprises a motor for a motorized activation of the suction unit. By means of the motor, the suction force can be consistently generated in an easy manner. Further, the climbing device is easy to use and/or handle, for example, by using a manually operatable trigger for starting and stopping the motor. The motor can be provided as a pump motor and/or blower motor for driving a pump or blower, which could be considered as being part of the activation unit and/or the suction unit. That is, the climbing device may comprise a motor driven pump and/or blower in order to activate the suction unit. Further, the motor can be provided as an actuator and/or servomotor for mechanically moving parts in the climbing device in order to generate the suction force.

Moreover, a climbing device in accordance with the present invention may comprise a battery for providing the motor with electrical energy for activating the suction unit. With the battery, the handling of the climbing device can be further improved. It is not required to find or have electrical sockets or an external pump/blower supply in order to generate the suction force. The battery may be provided as a rechargeable battery. Further, the battery may be provided in a battery case for manual replacement of the battery without the need of tools. Hence, the battery could be connected to the battery case by means of a rest- and/or clip-mechanism.

A climbing device according to the present invention may further comprise at least one pressure sensor for measuring the generated suction force and a controller for controlling the generated suction force based on the measured suction force. By means of the controller, the climbing device can be used even more reliable. By controlling the suction force, cases can be prevented in which the suction force is unintentionally too low or too high. If the suction force is too low, the person may fall from the climbing device when the climbing device may slip or fall from the surface. If the suction force is too high, the suction unit or other parts of the climbing device can deteriorate and/or be damaged. Having a controller for controlling the generated suction force can be understood as having a controller for monitoring the suction force based on the measured suction force and for adapting and/or adjusting the suction force in case of too low or too high values being measured. The controller may also be configured for monitoring the capacity of the battery and/or a power consumption in the climbing device and generating information recognizable by the person using the climbing device depending on the monitored capacity and/or power consumption. That is, in case the controller recognizes a battery capacity that is lower than a predetermined reference-capacity, an acoustic and/or visual signal may be transmitted to inform the person about the low battery capacity. Same applies for the power consumption in order to avoid, for example, an undesired sudden loss of pressure and suction force, respectively.

In addition, it is possible in a climbing device according to an embodiment of the present invention that the suction unit comprises a plurality of suction means provided spaced from each other. In combination with the flexible ladder structure, the climbing device can be mounted firmly even to curved surfaces in an easy and reliable manner. In a preferred embodiment, the suction unit comprises at least one suction means, in particular a plurality of suctions means, for each rung. Each suction means may generate suction force for attaching the ladder structure to the surface. The suction means can be provided as a vacuum pad, for example. It is further preferred that the suction means are placed at or beneath the rungs, preferably at or beneath each rung. The suction means may each be provided adjustable in position and/or orientation, that is, tiltable and/or turnable in a mounting point of each suction means, in order to be adjustable to the geometry of the surface when using the climbing device.

Furthermore, an inventive climbing device may comprise a connection unit providing a guided fluid connection between the suction means. That is, the suctions means may be interconnected with each other by means of the connection unit. The connection unit may comprise tubes and/or channels for guiding the fluid, in particular air, between the suction means and at least part of the activation unit. In case the activation unit comprises a pump, the connecting unit may also be connected to the pump. By means of the connection unit, the suction unit and/or suction means can be easily and reliable activated together. Manually checking each suction means is not necessary. In particular, when using the above mentioned at least one pressure sensor in the connection unit, a secure operation of the climbing device can be ensured. The climbing device may provide one pressure sensor in the connection unit and/or one pressure sensor for each suction means. Further, the climbing device may comprise a pressure sensor for different suction means like a pressure sensor for different groups of suction means like one pressure sensor for each group of suction means at each rung of the ladder structure.

A climbing device of the present invention may further comprise a valve for a controlled fluid outlet from the connection unit and a controlled fluid inlet into the connection unit. This provides the possibility of an easy and fast activation and deactivation of the suction unit. The valve can be understood as an opening that can be closed and opened to control the amount of fluid passing through the opening when activating and deactivating the suction unit.

In accordance with a further embodiment of the present invention, the climbing device may comprise at least one manually operable trigger for operating the activation unit to activate and deactivate the suction unit. The manually operable trigger can be understood as at least one button or switch for operating the activation unit and the climbing device, respectively. Having a trigger at one end portion of the ladder structure, for example, suction force can be easily applied to the other end portion of the ladder structure without the need of the person being there. Further, when there are two triggers, one at a lower end portion of the ladder structure and one at an upper end portion of the ladder structure, the climbing device can be easily and comfortably handled when manufacturing rotor blades, for example. In particular, the climbing device may be located at the surface of the mold for the rotor blade, and the suction unit can be activated by operating the trigger at the lower end portion. Once the person has climbed out of the construction area of the mold, they can deactivate the suction unit by operating the trigger at the upper end portion and pull the climbing device out of the construction area. The ladder structure may comprise an upper surface, on which the person walks and/or climbs when using the climbing device and a lower surface, which is placed next to the surface when attaching the ladder structure to the surface. The ladder structure further comprises a lower end surface and an upper end surface as well as two side surfaces over the length of the ladder structure. The at least one trigger is preferably mounted on at least one side surface. In this way, unintentionally operating the trigger by, for example, hitting it with a foot or a hand, can be prevented while still providing a location that is well reachable by the person.

In addition, a climbing device according to the present invention may comprise a controller that is configured for deactivating the suction unit only when the at least one trigger is operated in a predefined operating pattern and/or when two triggers are operated at the same time. This can improve the security for the person when using the climbing device. For example, there may be provided at least two triggers, one on each side surface or in other different locations on and/or at the ladder structure, wherein the controller may be configured such that two triggers have to be operated at the same time in order to activate and in particular deactivate the suction unit. In this way, an unintentional deactivation of the suction unit can be reliably prevented. The operating pattern may be predefined such that the suction unit will be activated only when pushing a button-shaped trigger, for example a pre-loaded button-shaped trigger, for a predefined period of time. This time could be longer than half a second, longer than a second or longer than two seconds, for example.

The ladder structure of a climbing device according to the invention may further comprise a zigzag-shaped, wave-shaped or and/or meander-shaped cross-section. That is, the rungs, steps and/or treads may form the zigzag-, wave- and/or meander-shape. In this way, the desired flexibility of the ladder structure can be achieved while still having sufficient stability in the ladder structure. Such a structure is further easy to manufacture. In particular, according to another embodiment of the present invention, the ladder structure can be made as one integral and/or monolithic structure, in which the rungs can be integrally and/or monolithically connected with each other. This also improves the stability of the ladder structure. The rungs of the climbing device may each have a trapezoidal cross-section. On such rungs, the person can climb comfortable and thus secure. Further, trapezoidal rungs are easy to manufacture, especially when each rung is formed trapezoidal in a respective monolithic zigzag-shape. Having a zigzag-, wave- and/or meander-shape further provides the advantage of having a compartment and/or recess for the activation unit, the suction unit and other function parts of the climbing device. The climbing device can thus be provided compact and robust.

Further measures improving the inventive concept can be drawn from the following description of preferred embodiments, which are schematically shown in the drawings. The features and advantages, which can be drawn from the claims, from the description and from the drawings, might be considered essential alone or in combination with each other.

The present invention is discussed in more detail with respect to the accompanying drawings, in which
- Fig. 1: shows a schematic cross-section of a climbing device according to an embodiment of the present invention in a mold for a rotor blade during a manufacturing process of the rotor blade, and
- Fig. 2: shows a schematic cross-section of a part of a climbing device according to a further embodiment of the present invention.

Elements and features having the same function and operating principle are labeled with the same reference signs in the drawings.

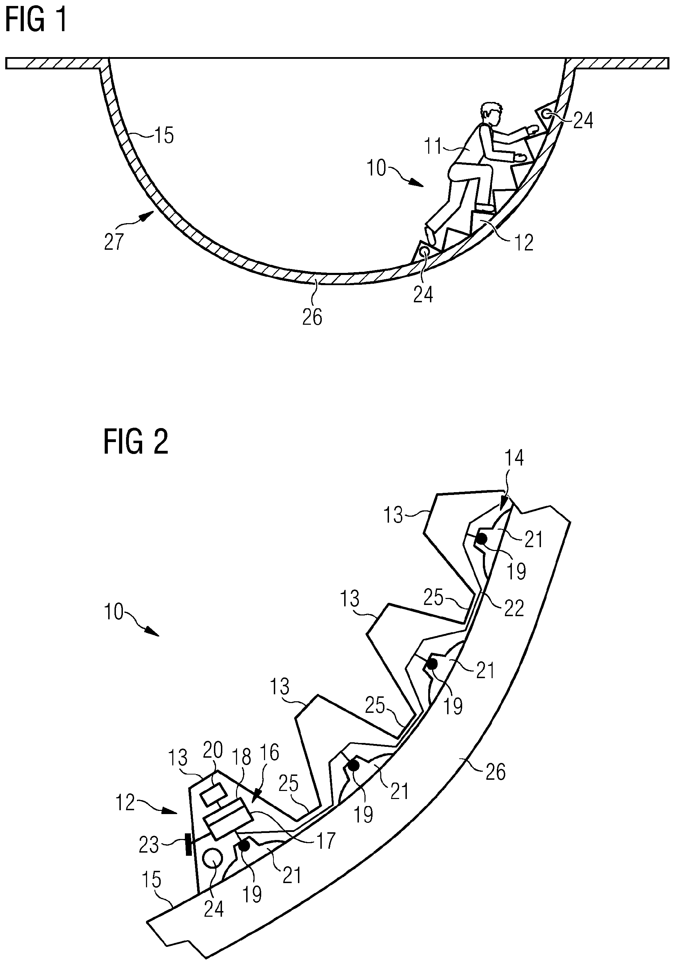

In fig. 1, a climbing device 10 with a flexible ladder structure 12 is shown in a working area of a mold 27 during the manufacturing process of a rotor blade for a wind turbine. The mold 27 has a wall 26 and a surface 15, to which the ladder structure 12 is attached. In fig. 1, the climbing device 10 is used by a person 11 climbing out of the working area and the mold 27, respectively. The climbing device 10 shown in fig. 1 comprises two button-shaped triggers 24, one at a lower end portion of the climbing device 10 and the other one at an upper end portion of the climbing device 10. The triggers 24 are located at a side surface of the climbing device 10 and the ladder structure, respectively. The climbing device 10 of fig. 1 is attached to the surface 15 via suction force. The triggers 24 can both be operated manually by the person 11.

In fig. 2, part of a climbing device 10 is shown in more detail. As can be seen in Fig. 2, the ladder structure 12 comprises rungs 13, each of which are having a trapezoidal shape. The ladder structure 12 is provided in monolithic form, in which the rungs 13 are integrally connected with each other. The ladder structure 12 can be considered as having a zigzag-shape.

The shown climbing device 10 further comprises a suction unit 14 for attaching the ladder structure 12 to the surface 15 via suction force, and an activation unit 16 for activating the suction unit 14 to generate the suction force and for deactivating the suction unit 14 to release the suction force. The activation unit 16 comprises a motor 17 for a motorized activation of the suction unit 14. The activation unit 16 further comprises a pump, which can be driven by the motor 17 in order to generate the desired suction force via the suction unit 14. The suction unit 14 comprises a plurality of suction means 21 provided spaced from each other at and/or underneath each rung 13.

The climbing device 10 further comprises a battery 18 for providing the motor 17 with electrical energy for activating and deactivating the suction unit 14. Moreover, the climbing device 10 comprises a pressure sensor 19 at each suction means 21 for measuring the generated suction force at and/or in the suction means 21. In addition, the climbing device 10 comprises a controller 20. The controller 20 is configured for controlling the generated suction force based on the measured suction force. That is, the controller 20 can drive the motor 17 based on the measured pressure in such a way that the pump will generate the desired suction force via the suction unit 14.

As can be seen in fig. 2, the climbing device 10 further comprises a connection unit 22 providing a guided fluid connection between the suction means 21. In particular, the connection unit 22 comprises fluid channels to fluidly connect not only the suction means 21 with each other but also the pump of the activation unit 16 with the suction means 21 as well as a valve 23. The valve 23 is provided for a controlled fluid outlet from the connection unit 22 into the environment of the climbing device 10 and for a controlled fluid inlet from the environment of the climbing device 10 into the connection unit 22. The fluid can be understood as ambient air in the shown example.

The aforesaid description of the accompanying drawings is only by the way of detail and example. Specific features of each aspect of the present invention and the figures can be combined which each other if of technical sense. For example, the ladder structure 12 may comprise a wave-shaped and/or meander-shaped cross-section, that is, a more rounded shape. The rungs 13 can be made of plastic and/or rubber. The ladder structure 12 may comprise coupling means 25 for coupling the rungs 13 with each other. The coupling means 25 can be part of a monolithic ladder structure 12 or be provided as ropes and/or bands for connecting the rungs 13 with each other. The controller can be further configured for deactivating the suction unit 14 only when a trigger 24 is operated in a predefined operating pattern and/or when two triggers 24 are operated at the same time.

## Claims

1. Climbing device (10) for a person (11) during the manufacturing process of a wind turbine, comprising a flexible ladder structure (12) with rungs (13), a suction unit (14) for attaching the ladder structure (12) to a surface (15) via suction force, and an activation unit (16) for activating the suction unit (14) to generate the suction force and for deactivating the suction unit (14) to release the suction force.

2. Climbing device (10) according to claim 1,
**characterized in that**
the activation unit (16) comprises a motor (17) for a motorized activation of the suction unit (14).

3. Climbing device (10) according to claim 2,
**characterized by**
a battery (18) for providing the motor (17) with electrical energy for activating the suction unit (14).

4. Climbing device (10) according to one of the preceding claims,
**characterized by**
at least one pressure sensor (19) for measuring the generated suction force and a controller (20) for controlling the generated suction force based on the measured suction force.

5. Climbing device (10) according to one of the preceding claims,
**characterized in that**
the suction unit (14) comprises a plurality of suction means (21) provided spaced from each other.

6. Climbing device (10) according to claim 5,
**characterized by**
a connection unit (22) providing a guided fluid connection between the suction means (21).

7. Climbing device (10) according to claim 6,
**characterized by**
a valve (23) for a controlled fluid outlet from the connection unit (22) and a controlled fluid inlet into the connection unit (22).

8. Climbing device (10) according to one of the preceding claims,
**characterized by**
at least one manually operable trigger (24) for operating the activation unit (16) to activate and deactivate the suction unit (14).

9. Climbing device (10) according to claim 8,
**characterized by**
a controller (20) that is configured for deactivating the suction unit (14) only when the at least one trigger (24) is operated in a predefined operating pattern and/or when two triggers (24) are operated at the same time.

10. Climbing device (10) according to one of the preceding claims,
**characterized in that**
the ladder structure (12) comprises a zigzag-shaped, wave-shaped or and/or meander-shaped cross-section.

11. Climbing device (10) according to one of the preceding claims,
**characterized in that**
the rungs (13) are integrally and/or monolithically connected with each other.

12. Climbing device (10) according to one of the preceding claims,
**characterized in that**
the rungs (13) and/or coupling means (25) for coupling rungs (13) with each other are made of plastic and/or rubber.
